**Europäisches Patentamt**

**European Patent Office**

**Office européen des brevets**

(19)

(11) Veröffentlichungsnummer: **0 080 490**
**B1**

(12) # EUROPÄISCHE PATENTSCHRIFT

(45) Veröffentlichungstag der Patentschrift:
01.04.87

(51) Int. Cl.⁴: **F 16 D 69/02**

(21) Anmeldenummer: **82901838.1**

(22) Anmeldetag: **04.06.82**

(86) Internationale Anmeldenummer:
**PCT/DE 82/00120**

(87) Internationale Veröffentlichungsnummer:
**WO 82/04295 (09.12.82 Gazette 82/29)**

(54) **REIBUNGSPARTNER FÜR GESCHMIERTE REIBUNGSKUPPLUNGEN.**

(30) Priorität: **05.06.81 DE 3122522**

(43) Veröffentlichungstag der Anmeldung:
**08.06.83 Patentblatt 83/23**

(45) Bekanntmachung des Hinweises auf die Patenterteilung:
**01.04.87 Patentblatt 87/14**

(84) Benannte Vertragsstaaten:
**AT BE CH DE FR GB LI LU NL SE**

(56) Entgegenhaltungen:
**DE - A - 2 010 099**
**GB - A - 789 987**
**US - A - 2 965 205**
**US - A - 3 702 126**
**US - A - 3 948 364**

**"Kupplungsatlas" 1975 A.G.T.-Verlag Georg Thieme,**
**Ludwigsburg (Kapitel 4.1.)**

(73) Patentinhaber: **Feldmühle Aktiengesellschaft,**
**Fritz-Vomfelde-Platz 4, D-4000 Düsseldorf 11 (DE)**

(72) Erfinder: **PFLAUM, Hermann, Ruffini-Allee 11,**
**D-8033 Planegg (DE)**
Erfinder: **VOJACEK, Herbert, Budapester Strasse 11,**
**D-8000 München 80 (DE)**

(74) Vertreter: **Uhlmann, Hans, Dr. rer.nat., Dipl.-Chem.,**
**Gladbacher Strasse 189, D-4060 Viersen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft Reibungspartner für nasslaufende, geschmierte Reibungskupplungen, bei denen zwei Flächen reibschlüssig verbunden werden, wobei mindestens ein Reibungspartner aus Sinterwerkstoffen besteht, insbesondere Synchronisiervorrichtungen für formschlüssige Schaltkupplungen, die aus mindestens einem Synchronisierring und einem diesem zugeordneten Gleichlaufring bestehen.

Die Erfindung wird nachstehend am Beispiel einer Synchronisiereinrichtung beschrieben, da Synchronisiereinrichtungen an formschlüssigen Schaltkupplungen, beispielsweise in Fahrzeuggetrieben, besonders beansprucht sind. Die Anwendung der Reibungspartner ist jedoch nicht auf Synchronisiereinrichtungen beschränkt.

Bei synchronisierten Schalt- oder Wechselgetrieben in Kraftfahrzeugen wird beim Schalten das auf der Welle frei laufende Zahnrad durch axiales Anpressen eines Synchronisierringes an einen dem Zahnrad zugeordneten Gleichlaufring in Gleichlauf mit der Welle gebracht, wobei die Übertragung der Kräfte und Momente von einer mit der Welle drehfest, aber axial verschieblich verbundenen Schiebemuffe über eine axiale oder radiale Sperr- und/oder Mitnehmerverzahnung auf den Synchronisierring erfolgt. Anschliessend wird das Zahnrad durch axiales Verschieben der Schiebemuffe, die dann in eine Mitnehmerverzahnung des Gleichlaufringes eingreift, formschlüssig mit der Welle verbunden. Der die Mitnehmerverzahnung tragende Gleichlaufring kann dabei direkt an das Zahnrad angeformt oder auch form- und/oder reib- und/oder stoffschlüssig mit dem Zahnrad verbunden sein. Zur Erreichung des Gleichlaufs zwischen Synchronisierring und Zahnrad weist der Synchronisierring aussenkonische oder innenkonische Reibflächen auf, die beim axialen Anpressen des Synchronisierringes mit entsprechenden Gegenflächen am Gleichlaufring in Kontakt kommen und durch den auftretenden Reibschluss den zum Durchschalten der formschlüssigen Kupplung erforderlichen Gleichlauf herstellen. Diese Reibflächen werden in der vorliegenden Erfindung als Reibungspartner bezeichnet. Es handelt sich also um eine Werkstoffpaarung von zwei aufeinander reibenden, unterschiedlichen Werkstoffen.

Analog sind Aufbau und Funktion bei synchronisierten Wellenkupplungen. Der die Mitnehmerverzahnung tragende Gleichlaufring ist in diesem Fall axial und drehfest am Ende einer Welle angeordnet, während der Synchronisierring wiederum über die Schiebemuffe drehfest, aber axial verschieblich, mit der zweiten Welle verbunden ist. Werden beide Wellen formschlüssig miteinander zusammengekuppelt, so wird zunächst die Schiebemuffe und mit ihr der Synchronisierring auf der einen Welle so weit axial verschoben, bis über die Konuskupplung ein Gleichlauf zwischen Synchronisierring und Gleichlaufring und damit zwischen den beiden Wellen hergestellt ist. Anschliessend wird die Schiebemuffe in Eingriff mit der Mitnehmerverzahnung des Gleichlaufringes gebracht.

Durch entsprechende Gestaltung der Mitnehmerverzahnungen an Synchronisierring und Schiebemuffe, beispielsweise durch axiales Anspitzen der Zähne mit geeigneten Spitzenwinkeln, können diese auch als Sperrverzahnung wirken und ein Durchschalten der formschlüssigen Kupplung vor Erreichen des Gleichlaufes verhindern.

Die Lebensdauer einer solchen Synchronisiereinrichtung sowie die Qualität der Synchronisiervorgänge ist im wesentlichen von den Reibeigenschaften der Konuskupplung abhängig. Zur Erzielung möglichst guter Reibeigenschaften sind bereits mehrere Möglichkeiten vorgeschlagen worden. So ist es aus der DE-OS 2 744 994 beispielsweise bekannt, den Synchronisierring aus Metall oder Kunststoff zu fertigen und auf die den Kupplungskonus bildende Fläche des Synchronisierringes einen Reibbelag von auf organischer Grundlage gebildetem Reibmaterial, insbesondere einen auf Papierbasis hergestellten Reibbelag, aufzukleben. Damit wird bei diesem Synchronisierring eine Trennung der zu bewältigenden Aufgaben insofern erreicht, als der Synchronisierring aus einem Material mit verhältnismässig hoher Festigkeit für die Sperr- und/oder Mitnehmerverzahnung besteht und der spezielle Reibbelag die erforderlichen Reibeigenschaften aufweist.

Die Verwendung eines gesonderten Reibbelages auf organischer Grundlage hat jedoch den Nachteil, dass aufgrund der Härtedifferenz zwischen den Reibpartnern, die aus dem weichen Material des Reibbelages auf dem Synchronisierring und dem demgegenüber harten Material der Reibfläche des Gleichlaufringes resultiert, nur eine relativ geringe Flächenpressung zulässig ist, die ihrerseits nur eine langsame Verdrängung des Ölfilms auf den Reibflächen ermöglicht und damit eine lange Synchronisierdauer zur Folge hat. Ausserdem ergeben sich aus der Härtedifferenz hohe Verschleissraten der Reibflächen pro Schaltvorgang, die die Lebensdauer der Synchronisiereinrichtung beschränken.

Analoge Reibungspartner, wie in der vorbeschriebenen Schrift, werden in der GB-PS 1 073 410 angeführt. So ist es möglich, die in Eingriff stehenden Teile, d.h. ein Reibelement mit Molybdän oder einer organischen Ausfütterung zu versehen, oder eine Molybdänbeschichtung bzw. eine Chromplattierung aufzubringen.

Das DE-GM 7 823 724 schlägt vor, eine Bronze/ Stahl-Paarung einzusetzen und dabei die Reibungspartner mit axial und/oder Umfangsnuten zu versehen, die als Gewinde ausgeführt sein können, so dass inselförmige Tragbereiche entstehen.

Der CH-PS 248 292 ist bei einer Konuskupplung zu entnehmen, Metall gegen weiches Nichtmetall einzusetzen und Umfangsrillen einzubringen.

Die US-PS 2 044 930 beschreibt Synchronisierringe, die aus einem Material mit hohem Reibungskoeffizienten bestehen, wie Messing oder Gusseisen, wobei der jeweilige Gegenring aus einem ähnlichen Material bestehen soll.

Bei all diesen Schriften sind die Reibungspartner geschmiert. Ihnen ist daher auch weiterhin gemeinsam, dass mindestens einer der Reibungspartner Spiral- oder Axialnuten oder beide Nuten in Kombination aufweist.

Eine ältere deutsche Schrift, die DE-PS 519 583, beschreibt eine Kupplung mit Reibscheiben aus Kork oder Filz, wobei statt der Scheiben auch ein Kegel eingesetzt werden kann. Eine solche Kupplung, die noch aus der Frühzeit des Automobilbaues stammt, weist natürlich aufgrund der Materialkombination Kork/Stahl bzw. Filz/Stahl oder auch Messing einen wesentlich stärkeren Verschleiss auf als die in der Zwischenzeit bekanntgewordenen nasslaufenden Kupplungen. Sie könnte auch nicht die heute geforderten hohen Kräfte und Momente übertragen.

Der grundlegende Unterschied des in der DE-PS 519 583 beschriebenen Vorschlags gegenüber den vorhergehend abgehandelten, liegt jedoch darin, dass es sich hier um eine trockene Reibung handelt, bei der völlig andere Reibwerte auftreten, die logischerweise auch völlig andere Verschleissraten ergeben, so dass schon aus diesem Grunde trocken aufeinanderlaufende Reibungspartner nicht mit solchen verglichen werden können, die geschmiert sind.

Die GB-PS 823 675 beschreibt eine Bremsplatte für Trommelbremsen, bei der eine Metallmatrix mit darin eingebetteten Keramikpartikeln durch Sintern erzeugt und mit einem Träger verbunden wird. Als Metalle werden Kupfer, Zink und Zinn eingesetzt, als Keramik Siliziumoxid und zwar im Bereich von 3 bis 30%. Es handelt sich also um eine relativ weiche Matrix, die nur geringe Keramikmengen aufnimmt. Der Reibungspartner dieser Matrix ist, wie bei Bremsen üblich, eine Gusstrommel, wobei selbstverständlich keine Schmierung zwischen den Reibungspartnern eintreten darf.

Die GB-PS 789 987 betrifft trockenlaufende Reibungspartner, die aus einer Keramikmatrix bestehen, die mit bis zu 40% Metall oder auch glasbildenden Füllstoffen gefüllt ist. Dadurch ist es möglich, Bremsleistungen auch noch bei Rotglut zu erreichen. Der Reibungspartner darf jedoch nicht aus Guss oder Stahl bestehen. Aufgrund der Sinterbedingungen und der hohen Porosität erreichen die hierbei verwandten Reibungspartner jedoch nur eine Härte zwischen 5 und 7,5 auf der Mohs'chen Härteskala.

Die Literaturstelle von August Schalitz: «Kupplungsatlas», die den Gattungsbegriff der unabhängigen Ansprüche 1 und 2 bildet, gibt unter der Überschrift «Reibungsstoffe» einen allgemeinen Überblick über die bei Kupplungen und Bremsen verwendeten Materialien. Es werden dabei auch keramische Sinterstoffe aufgeführt, die als Sinterbronzen mit hohen keramischen Zusätzen definiert werden.

Unter dem Begriff Reibungspaarung wird in der gleichen Literaturstelle dann auf die Reibungspaarung Stahl gegen Sinterbronze eingegangen, wobei die dynamische Reibungszahl bei Nasslauf etwa bei 0,06 liegt.

Der Erfindung liegt deshalb die Aufgabe zugrunde, die Reibungspartner so auszugestalten, dass auf einfache und wirtschaftliche Weise eine lange Lebensdauer und eine optimale Reibungszahl-Charakteristik der Reibungspartner erreicht werden kann.

Erfindungsgemäss wird diese Aufgabe durch die Merkmale der kennzeichnenden Teile der Ansprüche eins und zwei gelöst. Durch diese Werkstoffpaarung ist die Härte der Reibpartner so aufeinander abgestimmt, dass sich eine ausgeglichene Härtedifferenz bei grösserer absoluter Härte als bei bisher bekannten Reibpartnern ergibt. Damit ist eine höhere Flächenpressung als bisher zwischen den Reibpartnern mit schnellerer Verdrängung des Ölfilms und geringerer Synchronisierdauer möglich. Zusätzlich ergeben sich auch geringere Verschleissraten pro Schaltvorgang, d.h., dass sich die Lebensdauer der Reibungspartner und damit des gesamten Aggregates erhöht.

Als weiterer Vorteil ergibt sich, dass die Reibungspartner chemisch stabil und inert gegenüber Additiven im Getriebeöl, speziell gegenüber den EP-Zusätzen, sind; ferner, dass sie eine hohe Temperaturstabilität der Festigkeit, insbesondere der Druck- und Schubfestigkeit, aufweisen. Damit ist aber eine hohe Reibarbeit zulässig, so dass die erfindungsgemässen Reibungspartner, beispielsweise Synchronisiereinrichtungen für besonders grosse Getriebe, wie Getriebe in Lkw und Baufahrzeugen oder für grosse Wellenkupplungen, geeignet sind.

Als metallischer Werkstoff für einen Reibungspartner kommen sowohl reine Metalle als auch Metallegierungen in Betracht, beispielsweise Messing, Aluminium oder Titanlegierungen. Bevorzugt wird als metallischer Werkstoff jedoch ein Werkstoff der Eisengruppe, also der Elemente Kobalt, Nickel und Eisen sowie deren Legierungen, wobei das Hauptgewicht beim Eisen liegt. Als Eisen ist dabei sowohl Gusseisen, also üblicher Grauguss, als auch seine Sonderformen einsetzbar, ebenso kann Stahl verwendet werden, wobei auch dieser als Gussstück oder als Schmiede- und Pressstück verwandt werden kann. Besonders bevorzugt ist jedoch der Einsatz des sogenannten Sinterstahls als metallischer Werkstoff, wobei in diesem Fall zu den günstigen Reibeigenschaften, die dieses Material aufweist, noch der Vorteil hinzukommt, dass sich durch den Sintervorgang ein Werkstück mit hoher Massgenauigkeit erreichen lässt, das nur an wenigen Stellen zur Erzielung der geforderten Passungen nachgearbeitet werden muss.

Die Verwendung von Stahl bzw. Sinterstahl für beispielsweise Synchronisierringe bringt gegenüber Messing und anderen weichen Metallegierungen den Vorteil mit sich, dass aufgrund des hohen Elastizitätsmoduls des Werkstoffs eine grosse Steifigkeit und sehr geringe Aufweitung des Synchronisierringes unter der axialen Anpresskraft gegeben ist. Bei gleichem Konuswinkel führt dieses zu einer Reduktion der Schaltwege. Ausserdem unterliegen die Sperr- und/oder Mitnehmerverzahnungen auf dem Synchronisierring und dem Gleichlaufring durch die hohe Festigkeit und Härte des Stahlwerkstoffes, die beispielsweise durch eine zusätzliche Wärmebehandlung erreicht werden kann, einem geringeren Verschleiss.

Eine vorteilhafte Ausgestaltung der Erfindung sieht vor, dass die Sinterkeramik eine Oxidkeramik ist, vorzugsweise eine Oxidkeramik mit einem Aluminiumoxidgehalt von mindestens 90 Gew.%. Generell eignen sich als keramische Werkstoffe solche, die auf der Basis der Silizide, Boride, Karbide oder Titanate aufgebaut sind. Die bevorzugt eingesetzten sind jedoch Aluminiumoxid, Zirkonoxid und Siliziumnitrid, da diese Werkstoffe gegenüber den anderen eindeutige Vorteile hinsichtlich ihrer Härte bzw. ihrer Reibungszahl-Charakteristik aufweisen.

Von den Oxidkeramiken ist bekannt, dass sie mit zunehmender Reinheit höhere Festigkeits- und auch höhere Härtewerte erreichen. Als Oxidkeramik wird daher im allgemeinen ein Material bezeichnet, das eine Reinheit von mindestens 80 Gew.% des eingesetzten Oxides enthält. Im Bereich eines Oxidgehaltes oberhalb 90 Gew.%, insbesondere in dem Bereich, der sich 100 Gew.% annähert, verbessern wenige Prozentpunkte, ja sogar schon Zehntel, die mechanischen Eigenschaften in entscheidendem Masse. So beträgt beispielsweise die Härte einer Aluminiumoxidkeramik mit 97,5 Gew.% $1,8 \times 10^4$ Vickers. Wird der Aluminiumoxidanteil um nur 2 Gew.% erhöht, so beträgt die Härte bereits $2,2 \times 10^4$ Vickers und eine Steigerung auf einen Aluminiumoxidgehalt von 99,9 Gew.% führt zu einer Härte von $2,3 \times 10^4$ Vickers. Der Elastizitätsmodul ändert sich in diesem Bereich von $3,6 \times 10^5$ N/mm² auf $3,8 \times 10^5$ N/mm², während die Druckfestigkeit von 3000 N/mm² auf 4000 N/mm² steigt.

Parallel mit dieser Qualitätssteigerung geht jedoch auch eine Steigerung der damit verbundenen Kosten einher, da höhere Reinheit des Oxides gleichzeitig höhere Sintertemperaturen bedeutet und damit einen höheren Aufwand. Man wird daher im allgemeinen bestrebt sein, hochreines Aluminiumoxid einzusetzen, wobei unter diesen Begriff ein Material zu verstehen ist, das über 95 Gew.% $Al_2O_3$ enthält, nicht jedoch den unmittelbar an 100 Gew.% angrenzenden Bereich wählen, sondern vielmehr durch gezielte Zusätze anderer Oxide gewünschte Eigenschaften des Aluminiumoxids fördern bzw. steuern. So kann beispielsweise das Kornwachstum nicht nur durch die Sinterbedingungen, sondern auch durch Zusatz von Magnesiumoxid usw. gesteuert werden. Die Zugabe anderer Metalloxide ermöglicht das Einfärben des Materiales, ebenso kann durch gezielte Zugaben die Sintertemperatur erniedrigt werden.

Eine erhebliche Bedeutung für die Reibungspartner kommt der Porosität zu. Es ist seit langem bekannt, Sintermaterialien zu schaffen, die eine hohe Porosität aufweisen und dadurch in den Poren Öl speichern können, d.h., dass diese Materialien gute Notlaufeigenschaften aufweisen. Derartige Materialien werden im allgemeinen als Lagermaterial eingesetzt und sind als solches sehr weich. Als Reibungspartner für Kupplungen usw. sind sie damit nicht geeignet.

Gesinterte Oxidkeramik kann durch besondere Brandführung oder durch Zugabe geeigneter Mittel als poröse Keramik ausgestaltet werden. Diese poröse Keramik weist jedoch nur sehr geringe Festigkeitswerte auf, so dass sie ebenfalls nicht für eine Anwendung als Reibungspartner geeignet ist. Eine bevorzugte Ausgestaltung der Erfindung sieht deshalb vor, dass der keramische Werkstoff aus einer dichtgesinterten Oxidkeramik besteht, die eine Oberfläche mit hohem Porenanteil aufweist. Der hohe Porenanteil in der Oberfläche einer Oxidkeramik ist durch die Wahl von zwei Parametern einstellbar. Als erster Parameter dient dazu die Korngrösse des fertig gesinterten Produktes. Der zweite Parameter ist, dass das Produkt unter bestimmten Konditionen geschliffen werden muss. Die Schleifbedingungen sind dabei so gewählt, dass eine Anzahl der Körner aus der Bindung zum Nachbarkorn hinausgerissen wird, also das Korn ausbricht, wodurch eine Oberflächenpore entsteht. Bei der als Beispiel genannten Aluminiumoxidkeramik mit 97,5 Gew.% $Al_2O_3$-Gehalt kann diese Porosität – betrachtet als Gesamtporosität – 3,5% betragen, wohingegen sie bei einem Aluminiumoxidgehalt von 99,9 Gew.% nur bei 0,1% liegt. Für Reibungspartner wird, da hier eine hohe Porosität gewünscht wird, deshalb vorzugsweise eine Keramik verwandt, die einen Aluminiumoxidgehalt zwischen 96 Gew.% und 98 Gew.% aufweist.

Anders liegen die Verhältnisse bei der Verwendung von Siliziumnitrid als keramischem Material. Siliziumnitridkeramiken weisen auch bei relativ hoher Porosität noch gute Härte- und Festigkeitseigenschaften auf. Gemäss einer vorteilhaften Ausgestaltung der Erfindung besteht daher der keramische Werkstoff aus reaktionsgebundenem Siliziumnitrid mit einer Porosität zwischen 15% und 25%. Bei einer Porosität von 25% liegt dabei die Vickershärte bei $8 \times 10^3$ Vickers und steigt, wenn die Porosität auf 20% abnimmt, auf $11 \times 10^3$ Vickers. Die Härte einer Siliziumnitridkeramik mit der hohen Porosität von 25% ist jedoch völlig ausreichend und übersteigt bei weitem die Härte der bisher bekannten und üblichen Reibungspartner.

Der grosse Vorteil des Einsatzes von Keramiken, die eine zumindest poröse Oberfläche aufweisen, gegenüber den bisher bekannten Reibungspartnern ist, dass durch diese poröse Oberfläche bzw. durch die durchgehende Porosität im Falle des Siliziumnitrids ein Reibungspartner geschaffen wird, der als solcher allein aufgrund der Materialbeschaffenheit eine hervorragende Drainagewirkung aufweist. Der Stand der Technik geht davon aus, dass zur Beseitigung des Ölfilmes auf dem Reibungspartner stets Drainagemittel eingesetzt werden müssen, die in Form von Nuten oder Ringen ausgeführt sind, in die beim Zusammenpressen der Partner das Öl eintreten kann. Es verbleibt dabei jedoch immer ein gewisser Ölfilm noch auf den Reibungspartnern, der sich nicht verdrängen lässt, da aus Festigkeitsgründen die ölaufnehmenden Nuten nur in gewissem Abstand voneinander angeordnet sein können. Durch den Einsatz einer porösen Oberfläche wird dieser Bereich sehr weitgehend verringert, so dass praktisch der gesamte Ölfilm verdrängt werden kann.

Gemäss einer vorteilhaften Ausgestaltung der Erfindung ist die Sinterkeramik mit einem Tragkörper verbunden. Bei Ausführung als Synchronisierring kann also der keramische Körper, der in diesem Fall als Innenkonus ausgeführt ist, zur Befestigung direkt in den Synchronisierring eingeschrumpft werden. Dieses Vorgehen empfiehlt sich besonders, wenn als Sinterkeramik Aluminiumoxid eingesetzt wird. Bei der Verwendung von Zirkonoxid, das eine höhere Elastizität als Aluminiumoxid aufweist, ist es auch möglich, einen Aussenkonus zu fertigen und diesen beispielsweise auf den Gleichlaufring aufzuziehen, wobei auch hier das Aufziehen auch als Aufschrumpfen erfolgen kann, ebenso ist es jedoch möglich, durch zusätzliche mechanische Mittel, beispielsweise eine Klemmung, die Befestigung des Keramikteiles vorzunehmen.

Eine weitere vorteilhafte Möglichkeit der Befestigung besteht darin, die Sinterkeramik in Form von Segmenten auszuführen und in den Tragkörper einzulagern. In diesem Falle besteht also beim Beispiel des Synchronisierringes nicht die gesamte Innenfläche des Ringes aus Keramik, sondern in den Ring sind beispielsweise in Form einer Schwalbenschwanzführung einzelne Segmente aus keramischem Werkstoff eingeschoben.

Eine besonders bevorzugte Ausgestaltung der Erfindung sieht vor, dass die Segmente in das Trägermaterial eingesintert sind. Bei dieser Ausgestaltung der Erfindung ergibt sich eine hohe Einsparung an Arbeitsaufwand. Die einzelnen, bereits fertig gesinterten Keramiksegmente werden in die Form des als Beispiel zitierten Synchronisierringes eingebracht, woran sich dann das übliche Sinterverfahren für die Herstellung von Sinterstahlteilen anschliesst. Da die Sintertemperatur der Keramik erheblich über den Sintertemperaturen von Stahl liegt, erfolgt keine Beeinträchtigung der Keramik während des Sintervorganges. Auf der anderen Seite ergibt sich ein fester Verbund zwischen Keramik und Trägermaterial.

Eine weiter vorteilhafte Ausgestaltung der Erfindung sieht vor, dass die Sinterkeramik als dünne Schicht durch Sputtern auf das Trägermaterial aufgebracht ist. Zweckmässig beträgt dabei die Schichtdicke 2 bis 50 µm. Mit dem Aufbringen durch Sputtern wird eine sehr hohe Haftfähigkeit der Schicht erreicht. Ausserdem kann dadurch die Schichtdicke sehr klein gehalten werden, so dass sich ein verhältnismässig geringer Materialeinsatz verbunden mit einer sehr guten Wärmeableitung auf den Werkstoff des Synchronisierringes bzw. Gleichlaufringes, also des Tragkörpers, ergibt. Die Schichtdicke liegt dabei vorzugsweise zwischen 5 und 15 µm.

Wird die Sinterkeramik durch Sputtern aufgebracht, so besteht die weitere Möglichkeit, dass in ihm mindestens eine Metallkomponente eingelagert werden kann, wodurch sowohl die Elastizität als auch die Festigkeit der Verbindung der Keramikkomponenten zum Trägermaterial gesteigert wird. Ebenso wird die Reibungszahl-Charakteristik optimiert.

Die Erfindung wird nachstehend anhand der Zeichnungen näher erläutert.

Fig. 1 zeigt im Schnitt eine Synchronisiereinrichtung mit einem als Ringkörper ausgebildeten Reibbelag,

Fig. 2 im Schnitt eine Synchronisiereinrichtung mit einer aufgesputterten Schicht als Reibbelag,

Fig. 3 zeigt das Schema eines Synchronringprüfstandes im Axialschnitt,

Fig. 4 die Prinzipskizze der Reibmomentenmessung,

Fig. 5 zeigen Kurven, die die Reibungszahl in Abhängigkeit bis 16 von der Gleitgeschwindigkeit angeben.

In den Figuren ist mit (1) ein abschnittsweise dargestellter Synchronisierring und mit (4) ein ebenso abschnittsweise dargestellter Gleichlaufring bezeichnet.

Der Synchronisierring (1) trägt eine radiale Sperrverzahnung (2), mittels der er über eine der Übersichtlichkeit wegen nicht dargestellte Schiebemuffe mit der Welle drehfest, aber axial verschieblich, verbunden ist. In die radiale Mitnehmerverzahnung (5) von Gleichlaufring (4) greift eine ihr entsprechende Verzahnung der Schiebemuffe zur formschlüssigen Verbindung von Welle und Gleichlaufring (4). Den zum formschlüssigen Verbinden erforderlichen Gleichlauf zwischen Synchronisierring (1) und Gleichlaufring (4) stellt eine Konuskupplung her.

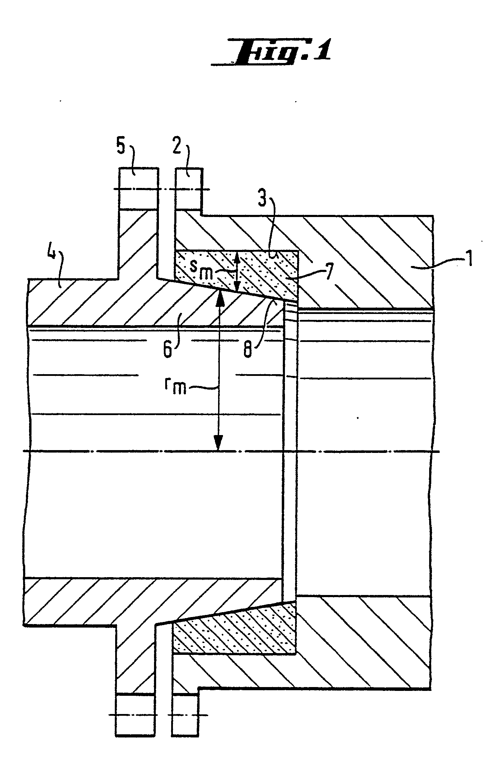

Gemäss Fig. 1 ist die Konuskupplung in der Weise ausgebildet, dass an den Gleichlaufring (4) ein Ansatz (6) mit aussenkonischer Oberfläche angeformt ist, während der Synchronisierring (1) eine gerade Hohlbohrung (3) mit grösserem Innendurchmesser als der grösste Aussendurchmesser des Ansatzes (6) des Gleichlaufringes (4) aufweist, in die als Reibbelag ein Ringkörper (7) aus keramischem Werkstoff mit einer entsprechenden innenkonischen Reibfläche (8) eingesetzt ist. Der Ringkörper (7) ist dabei in die Hohlbohrung (3) des Synchronisierringes (1) eingepresst oder eingeklebt. Die mittlere Dicke $s_m$ des Ringkörpers (7) steht in Abhängigkeit des mittleren Reibradius $r_m$, wobei das Verhältnis der mittleren Dicke $s_m$ des Ringkörpers (7) zum mittleren Reibradius $r_m$ zwischen 0,03 und 0,3 liegt.

Anstatt den Ringkörper (7) in die Hohlbohrung (3) des Synchronisierringes (1) einzusetzen, besteht auch die Möglichkeit, den Ringkörper (7) auf einen an den Gleichlaufring (4) angeformten Ansatz mit gleichmässigem Umfang aufzukleben oder aufzupressen und dem Ringkörper (7) eine aussenkonische und der Hohlbohrung des Synchronisierringes (1) eine innenkonische Oberfläche zu geben.

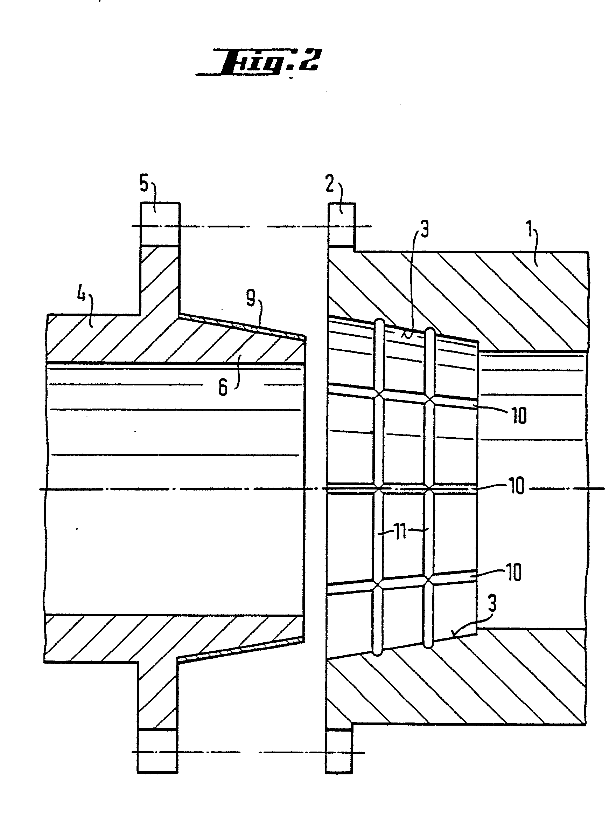

Gemäss Fig. 2 ist die Konuskupplung in der Weise ausgebildet, dass auf einen an den Gleichlaufring (4) angeformten Ansatz (6) mit aussenkonischer Oberfläche als Reibbelag eine dünne Schicht (9) aus einem harten, verschliessfesten, mineralhaltigen Werkstoff durch Sputtern aufgebracht ist und dass der Synchronisierring (1) eine Hohlbohrung (3) mit einer der aussenkonischen Kontur der Schicht (9) entsprechenden innenkonischen Oberfläche aufweist: Die Dicke der Schicht (9) aus Chromnitrid, das aufgesputtert wurde, beträgt 12 µm. In die Oberfläche der Hohlbohrung (3) sind zur Öl- und Verschleisspartikelabführung axiale Nuten (10) und in Umfangsrichtung verlaufende Nuten (11) eingearbeitet.

Auch bei dieser Ausbildungsform besteht die Möglichkeit, die Schicht aus mineralhaltigem Werkstoff anstatt auf den Ansatz (6) des Gleichlaufringes (4) auf die Oberfläche der Hohlbohrung (3) des Synchronisierringes (1) durch Sputtern aufzubringen. Ebenso können die Nuten zur Öl- und Verschliesspartikelabführung unmittelbar in der Schicht aus mineralhaltigem Werkstoff und/oder im beschichteten Grundmaterial ausgebildet sein.

Neben den in Fig. 1 und Fig. 2 dargestellten Ausführungsformen der Synchronisiereinrichtung ist es ebenso möglich, die aussenkonische Oberfläche am Synchronisierring (1) und die innenkonische Oberfläche am Gleichlaufring (4) anzuordnen.

Bei allen Ausführungsformen der Synchronisiereinrichtung können der Synchronisierring (1) und der Gleichlaufring (4) aus Stahl, insbesondere Sinterstahl, aus Gusseisen oder den genannten Metallegierungen gefertigt sein. Handelt es sich um eine Synchronisiereinrichtung für Kfz-Schaltgetriebe, kann der Gleichlaufring (4) direkt an ein lose auf der Welle sitzendes Zahnrad angeformt oder form- und/oder reib- und/oder stoffschlüssig mit diesem verbunden sein.

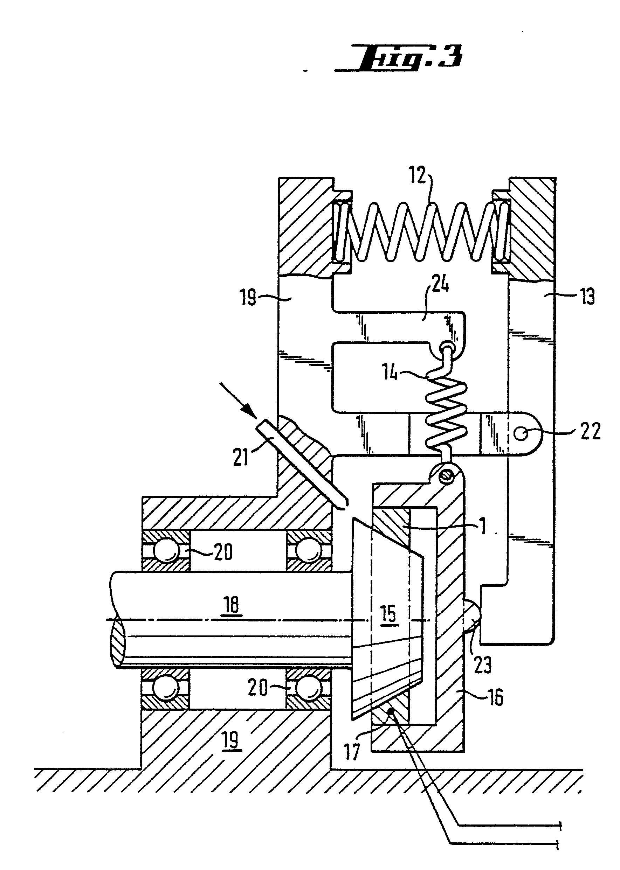

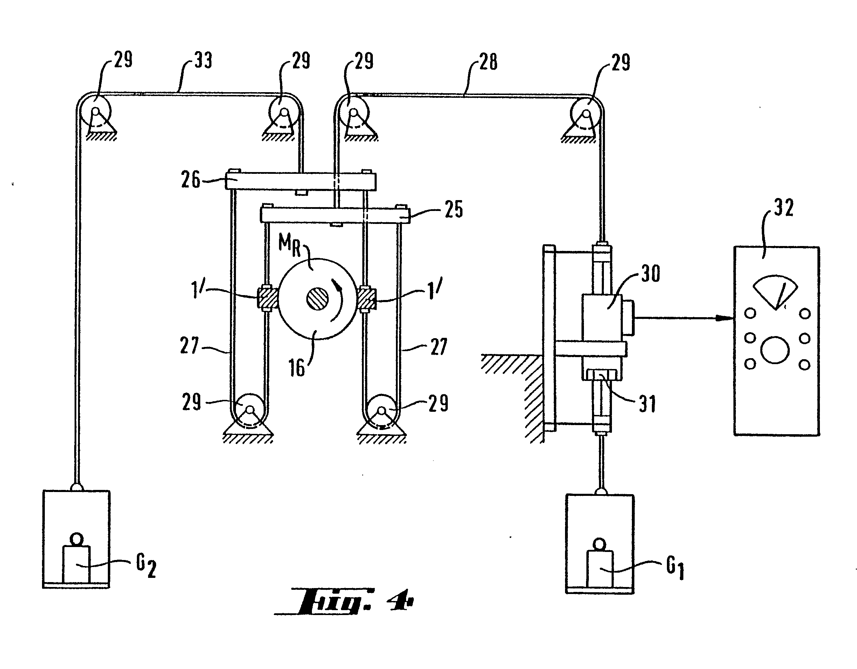

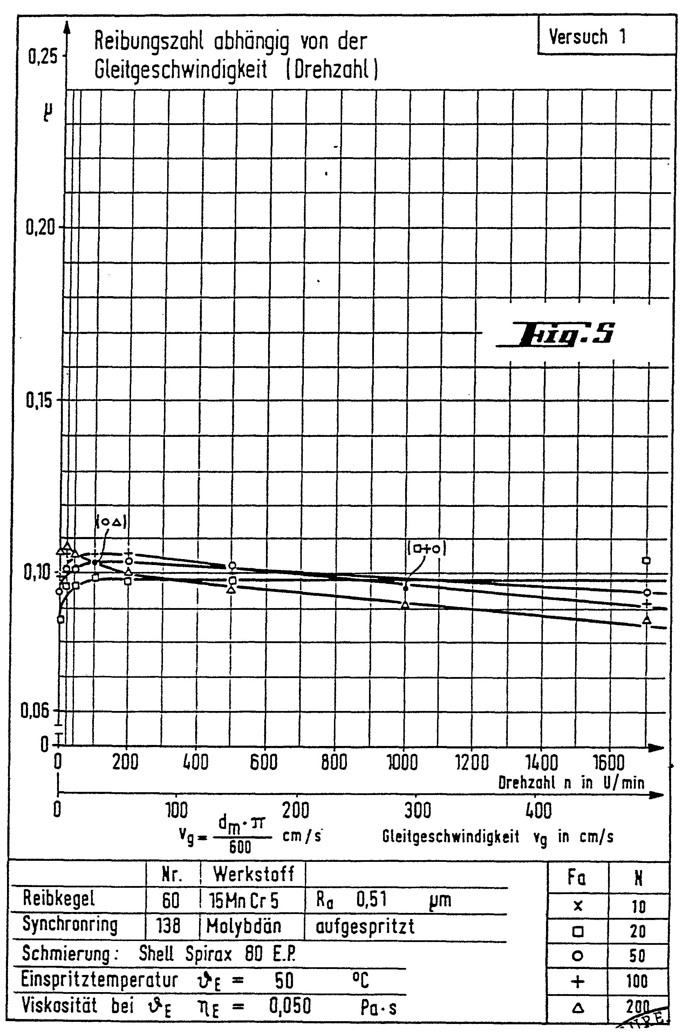

Die Fig. 3 und 4 zeigen als Prinzipskizze den Aufbau eines Prüfstandes für Synchronringe, wie er zur Durchführung von Messungen, die als Grundlage der Fig. 5 bis 16 dienten, erstellt wurde. Der mechanische Teil des Prüfstandes besteht im wesentlichen aus einem Rahmen (19), in dem auf Kugellager (20) die Antriebswelle (18) gelagert ist, die den Reibkegel (15) trägt. Diese Antriebswelle (18) wird über ein elektromotorbetriebenes Nullregelreibradgetriebe angetrieben.

An dem Federarm (24), der Teil des Rahmens (19) ist, greift die Federaufhängung (14) an, die den Träger (16) für den Synchronring (1) aufnimmt. Am Druckpunkt (23) des Trägers (16) greift ein im Gelenk (22) gelagerter Hebel (13) an, der über die Anpressfeder (12) den Synchronring (1) an den Reibkegel (15) presst. Die dabei auftretende Erwärmung wird über das Thermoelement (17) erfasst. Eine Öldüse (21) dient zur Zufuhr des Schmiermittels, das vor dem Einspritzen temperiert wird. Welche Schmiermittel für die einzelnen Versuche verwandt wurden, ergibt sich aus den den Kurven nachgeschalteten Erläuterungen, ebenso ist daraus die Einspritztemperatur und die Viskosität des Schmiermittels zu entnehmen.

Die Anpressfedern (12) sind geeichte Federn, so dass durch Austausch der Anpressfedern (12) definierte Anpresskräfte ausgeübt werden können.

Die Federn der Aufhängung des Synchronringes (1) ermöglichen eine geringe Verdrehung bei Übertragung des Drehmomentes zwischen Kegel und Ring. Diese Verdrehung bewegt den Träger (16), der sie über die Übertragungsseile (27) nach Umlenkung über Umlenkrollen (29) auf den unteren Waagebalken (25) bzw. den oberen Waagebalken (26) überträgt. Der obere Waagebalken (26) ist über ein Seil (33), das über Umlenkrollen (29) geführt wird, mit dem Eichgewicht G2 verbunden; der untere Waagebalken (25) über ein Seil (28), das über Umlenkrollen (29) geleitet wird, mit der Kraftmessdose (30). Die Kraftmessdose (30) ist über den Öldämpfer (31) mit dem Gegengewicht G1 zur Nullpunktverschiebung verbunden und übermittelt die erhaltenen Messwerte an die Messbrücke 32.

Der Prüfstand weist folgende Daten auf:

Die Anpresskraft des Synchronringes (1) auf den Reibkegel (15) kann stufenlos zwischen 10 und 400 N eingestellt werden. Die Drehzahl der Antriebswelle (18) und damit des Reibkegels (15) kann stufenlos zwischen 0 und 1700 U/Min. eingestellt werden. Sie ist in den Messpunkten des Diagrammes konstant gehalten worden. Die Ölversorgung erfolgt über eine temperaturgeregelte Öleinspritzung in den Spalt zwischen Reibkegel (15) und Synchronring (1). Die Öleinspritztemperatur wurde bei den einzelnen Versuchen konstant gehalten und war zwischen 30 und 100°C regelbar. Die Messgenauigkeit des Prüfstandes betrug + 2%. Der Reibflächendurchmesser betrug 55 mm, die Reibflächenbreite 10 mm, der Kegelwinkel lag bei 6 Grad und 30 Min.

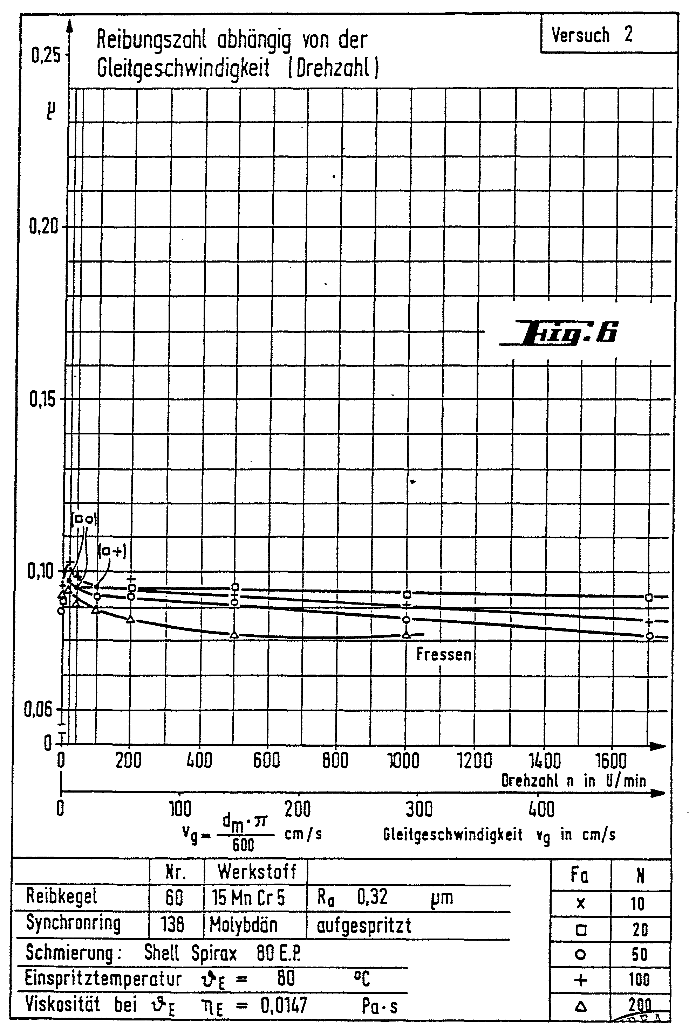

In den Fig. 5 und 6 sind Kurven dargestellt, bei denen der Reibkegel aus dem Werkstoff 15MnCr5 mit einem Ra-Wert von 0,51 µm bzw. einem Ra-Wert von 0,32 µm bestand. Der handelsübliche Synchronring wies eine aufgespritzte Molybdänschicht auf.

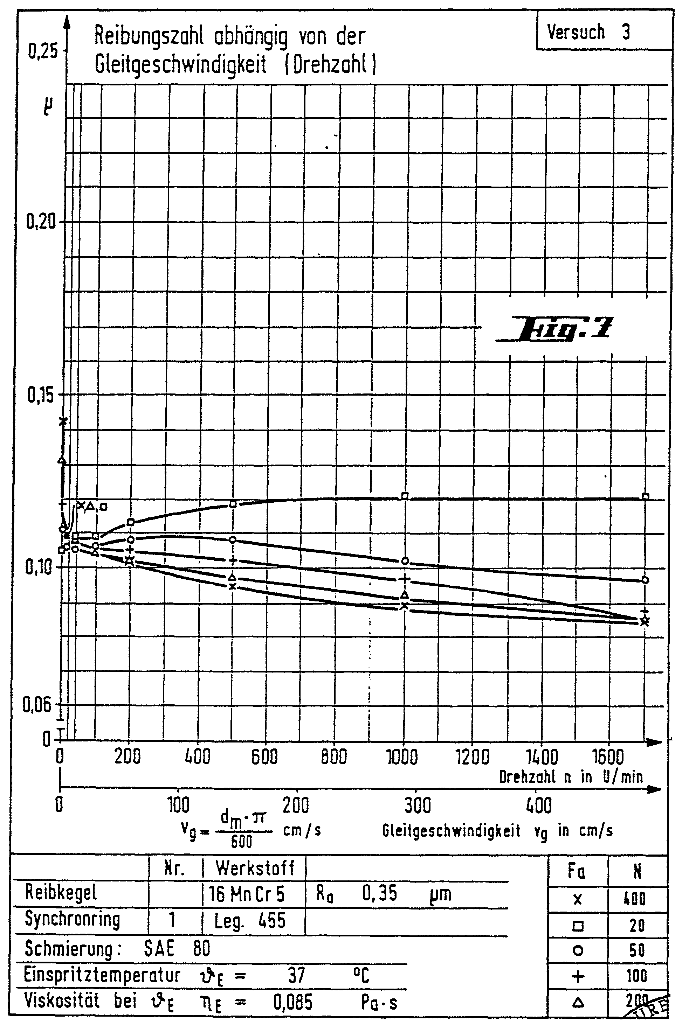

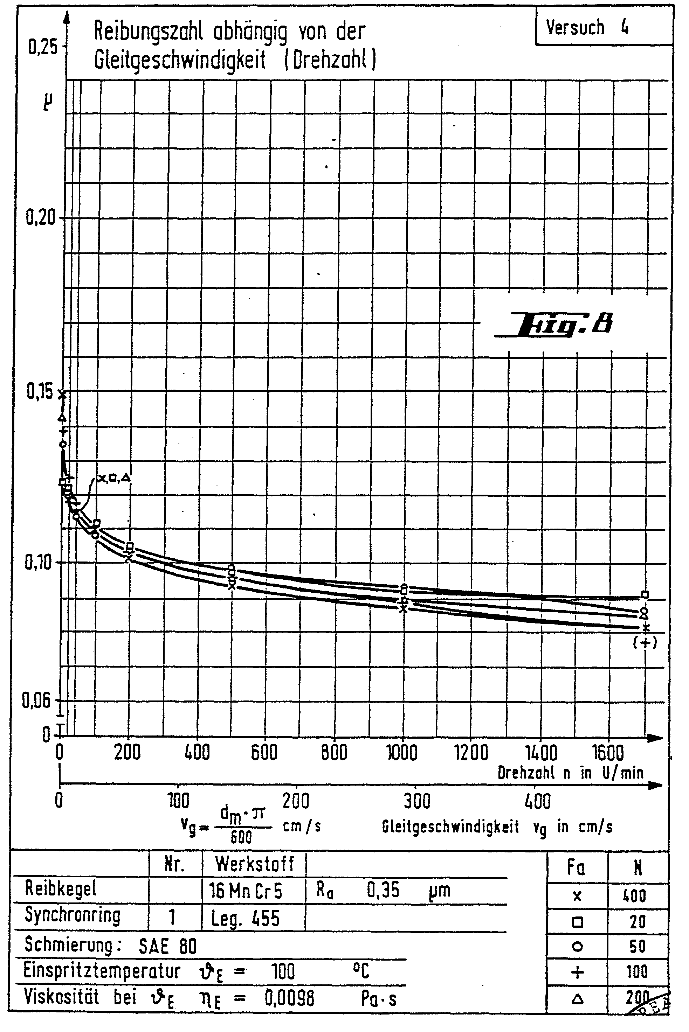

Die Fig. 7 und 8 zeigen ebenfalls Kurven von handelsüblichen Synchronringen aus einer Messinglegierung, die gegen einen Reibkegel aus dem Werkstoff 16MnCr5 läuft.

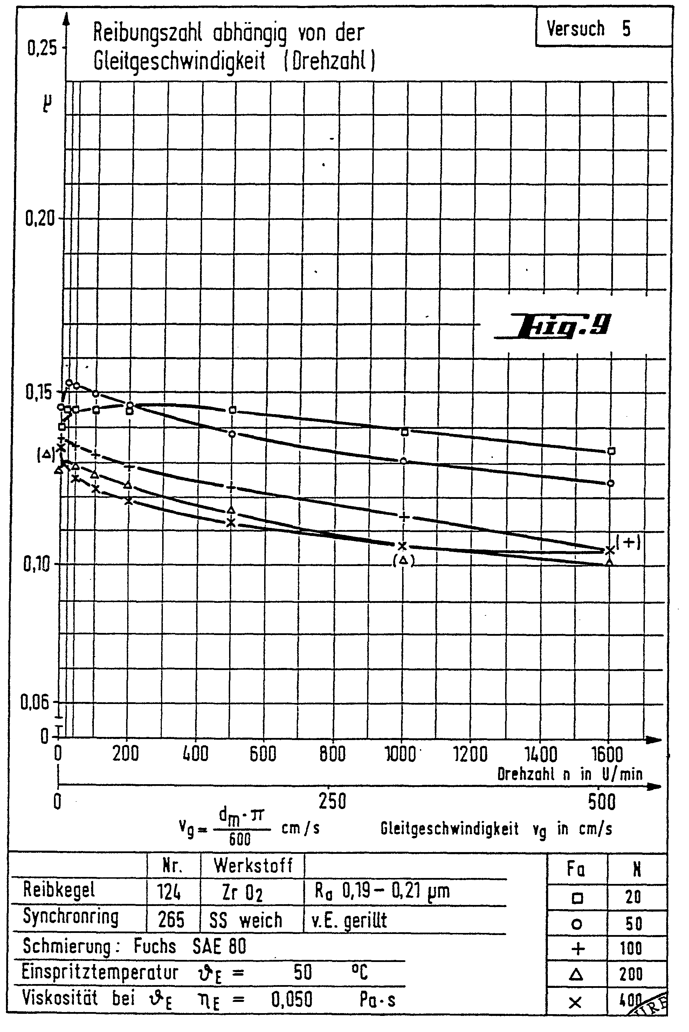

Die Fig. 9 bis 16 zeigen die erfindungsgemässe Paarung der Reibungspartner. Bei Fig. 9 besteht der Reibkegel aus Zirkonoxid, der gegen einen gerillten Synchronring aus nicht gehärtetem Sinterstahl läuft. Die Rillung weist die Form eines Trapezgewindes auf.

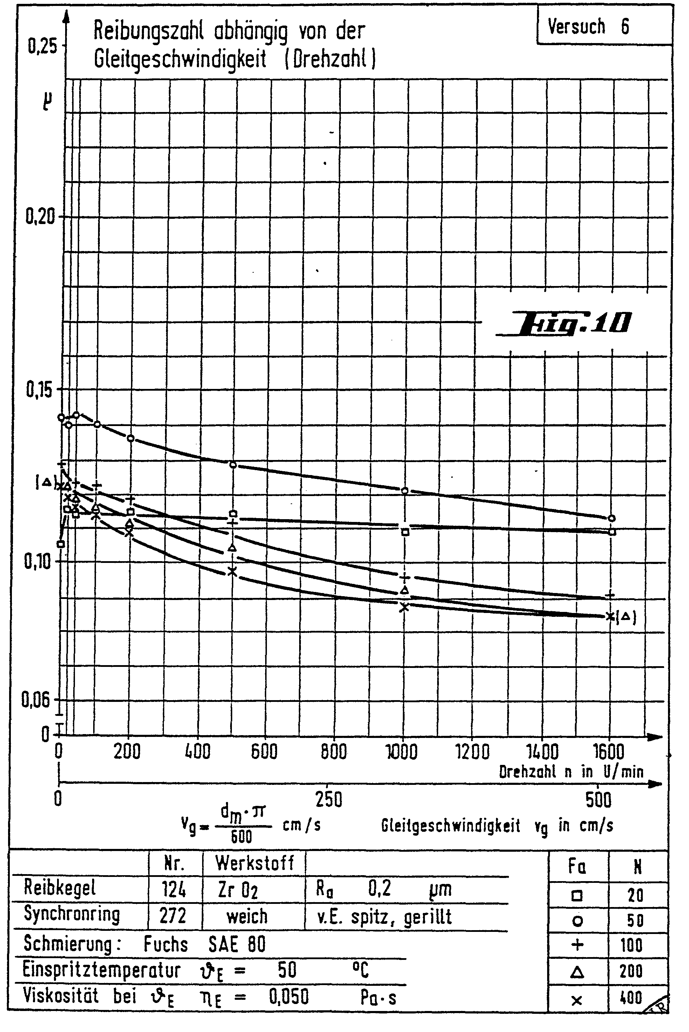

In Fig. 10 ist die eingebrachte Rillung spitz und entspricht bei einem Winkel von ca. 60 Grad dem Withworth-Gewinde.

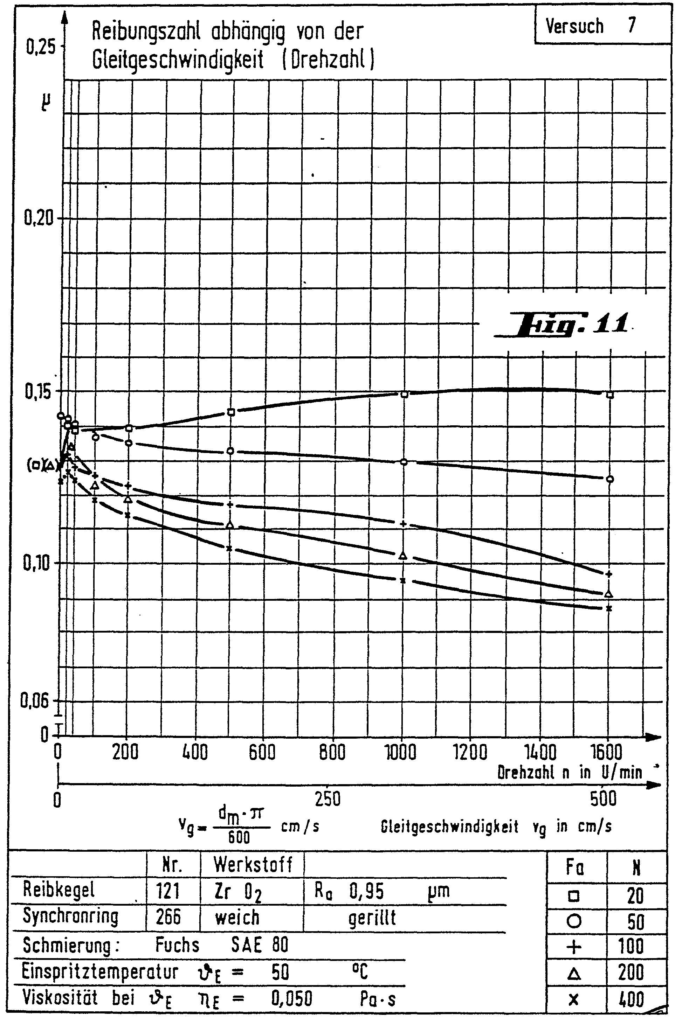

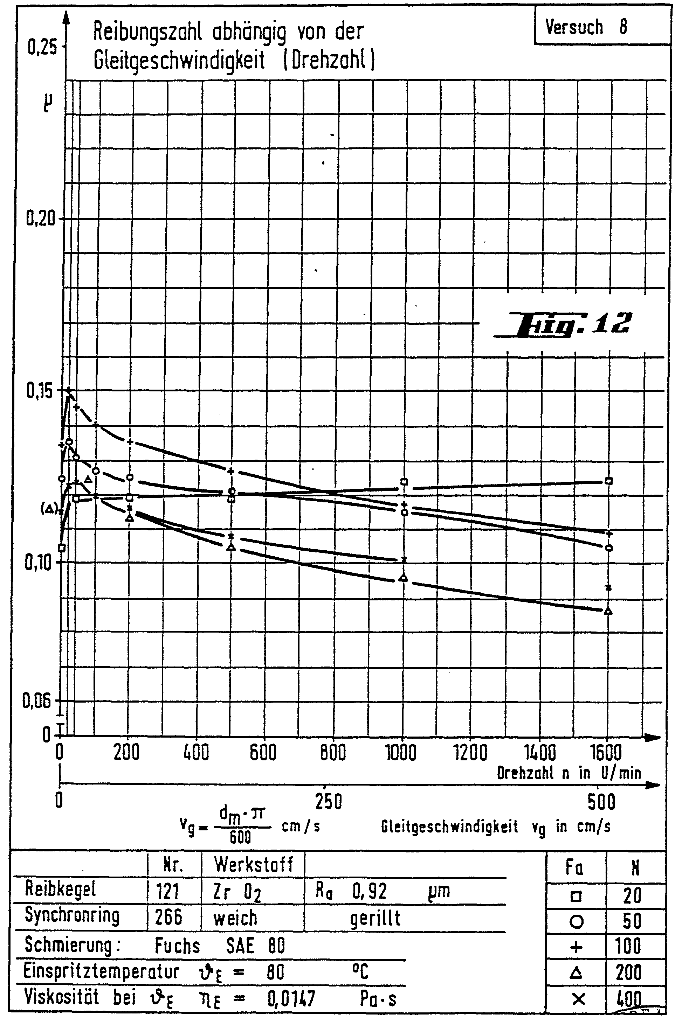

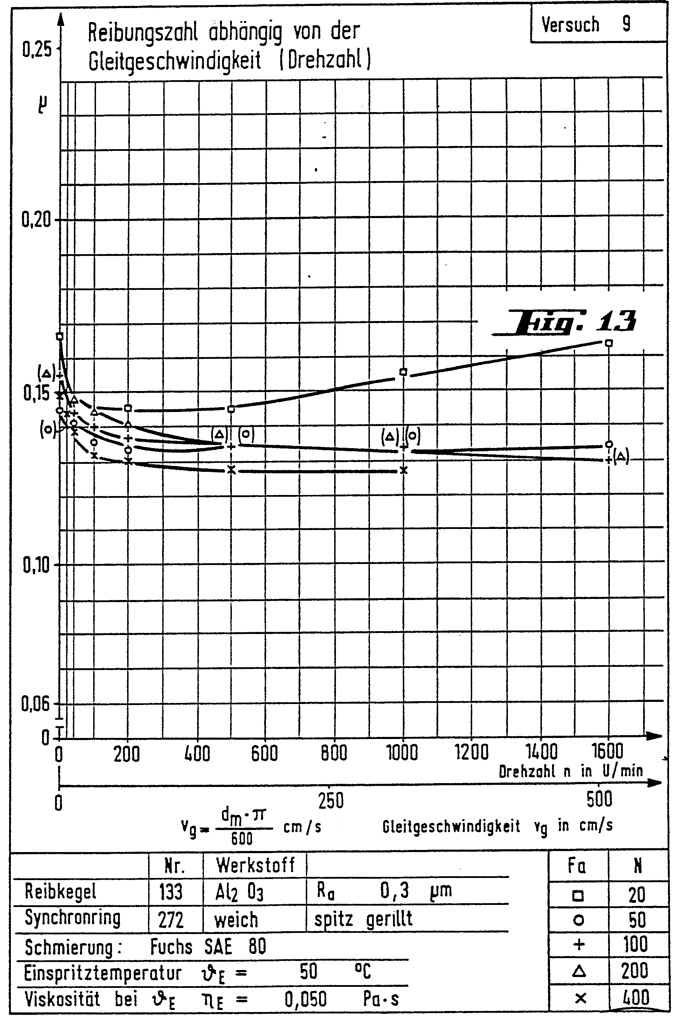

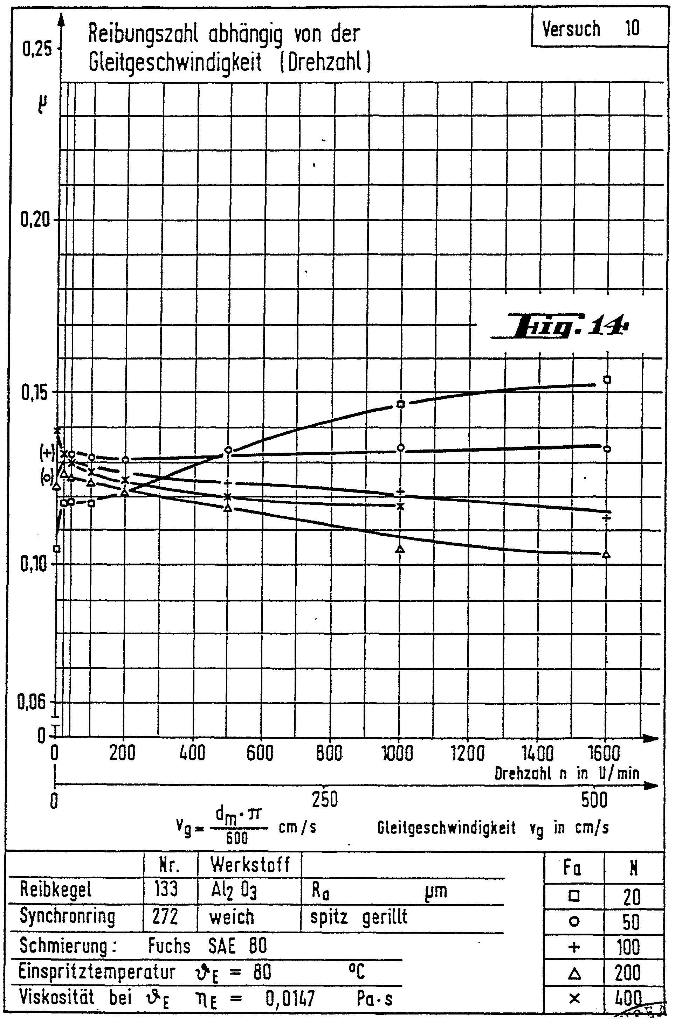

Fig. 11 und 12 unterscheiden sich von den vorgenannten durch den Rauhigkeitswert. Bei den Fig. 13 und 14 wurde als Reibkegelmaterial Aluminiumoxid eingesetzt. Das Material des Synchronringes ist ebenfalls nicht gehärteter Sinterstahl. Der Unterschied zwischen beiden Kurven ergibt sich durch die unterschiedliche Schmierungstemperatur.

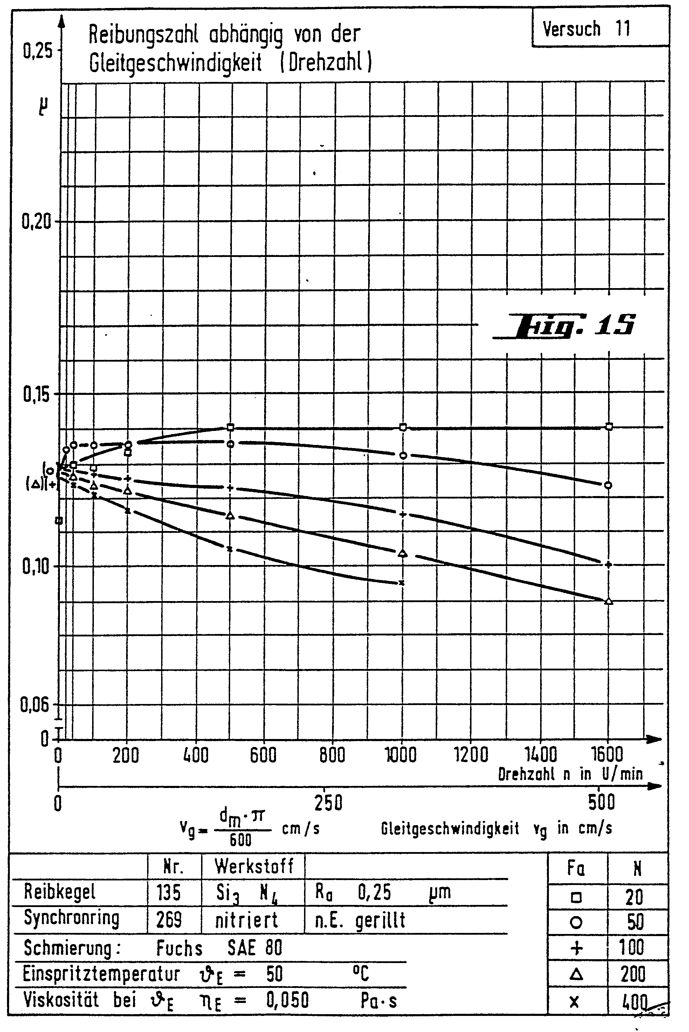

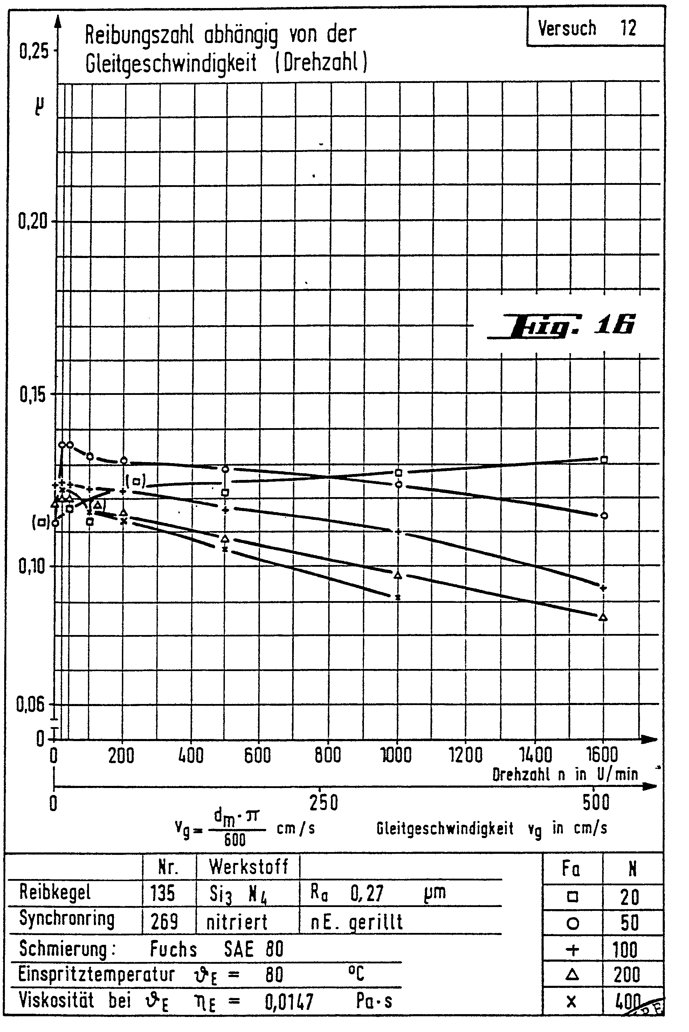

Fig. 15 und 16 zeigen einen Reibkegel aus Siliziumnitrid. Der Synchronring besteht ebenfalls aus Sinterstahl. Dieser Sinterstahl ist jedoch einer Nitrierhärtung unterworfen. Die Rillung ist trapezförmig eingebracht.

## Patentansprüche

1. Reibungspartner für nasslaufende, geschmierte Reibungskupplungen, bei denen zwei Flächen reibschlüssig verbunden werden, wobei ein Reibungspartner aus Sinterwerkstoffen und der andere aus einem metallischen Werkstoff besteht, insbesondere Synchronisiervorrichtungen für formschlüssige Schaltkupplungen, die aus mindestens einem Synchronisierring und einem diesem zugeordneten Gleichlaufring bestehen, dadurch gekennzeichnet, dass der Sinterwerkstoff des einen Reibungspartners eine Sinterkeramik ist, die eine Reinheit von mindestens 80 Gew.% der eingesetzten Sinterwerkstoffe aufweist.

2. Reibungspartner für nasslaufende, geschmierte Reibungskupplungen, bei denen zwei Flächen reibschlüssig verbunden werden, wobei mindestens ein Reibungspartner aus Sinterwerkstoffen besteht, insbesondere Synchronisiervorrichtungen für formschlüssige Schaltkupplungen, die aus mindestens einem Synchronisierring und einem diesem zugeordneten Gleichlaufring bestehen, dadurch gekennzeichnet, dass der Sinterwerkstoff des einen Reibungspartners eine Sinterkeramik ist, die eine Reinheit von mindestens 80 Gew.% der eingesetzten Sinterwerkstoffe aufweist und der andere Reibungspartner aus Sinterkeramik mit vom ersten Reibungspartner unterschiedlicher chemischer Zusammensetzung besteht und ebenfalls eine Reinheit von mindestens 80 Gew.% der eingesetzten Sinterwerkstoffe aufweist.

3. Reibungspartner nach Anspruch 1, dadurch gekennzeichnet, dass der metallische Werkstoff ein Sinterstahl ist.

4. Reibungspartner nach Anspruch 1 oder 2, dadurch gekennzeichnet, dass die Sinterkeramik Oxidkeramik ist.

5. Reibungspartner nach Anspruch 4, dadurch gekennzeichnet, dass die Sinterkeramik eine Oxidkeramik mit einem Aluminiumoxidgehalt von mindestens 90 Gew.% ist.

6. Reibungspartner nach Anspruch 4, dadurch gekennzeichnet, dass die Sinterkeramik ein Zirkonoxid ist.

7. Reibungspartner nach Anspruch 1 oder 2, dadurch gekennzeichnet, dass die Sinterkeramik ein Siliziumnitrid ist.

8. Reibungspartner nach einem der Ansprüche 1 bis 7, dadurch gekennzeichnet, dass in der Sinterkeramik mindestens eine Metallkomponente eingelagert ist.

9. Reibungspartner nach einem der Ansprüche 1 bis 8, dadurch gekennzeichnet, dass die Sinterkeramik mit einem Tragkörper verbunden ist.

10. Reibungspartner nach Anspruch 9, dadurch gekennzeichnet, dass die Sinterkeramik in Form von Segmenten ausgeführt ist, die in den Tragkörper eingelagert sind.

11. Reibungspartner nach Anspruch 10, dadurch gekennzeichnet, dass die Segmente in den Tragkörper eingesintert sind.

12. Reibungspartner nach Anspruch 9, dadurch gekennzeichnet, dass die Sinterkeramik als dünne Schicht (9) durch Sputtern auf den Tragkörper aufgebracht ist.

13. Reibungspartner nach Anspruch 12, dadurch gekennzeichnet, dass die Schichtdicke 2 bis 50 µm beträgt.

14. Reibungspartner nach einem der Ansprüche 1 bis 13, dadurch gekennzeichnet, dass mindestens einer der Reibungspartner im Kontaktbereich mit dem anderen Reibungspartner Drainagemittel (10, 11) aufweist.

15. Reibungspartner nach einem der Ansprüche 1 bis 6 und 8 bis 13, dadurch gekennzeichnet, dass die Sinterkeramik eine dichtgesinterte Oxidkeramik ist, die eine Oberfläche mit hohem Porenanteil aufweist.

16. Reibungspartner nach Anspruch 7, dadurch gekennzeichnet, dass die Sinterkeramik ein reaktionsgebundenes Siliziumnitrid mit einer Porosität von 15 bis 25% ist.

## Claims

1. Friction partners for wet-operating, lubricated friction couplings in which two surfaces are connected by frictional engagement, one friction partner consisting of sintered materials and the other consisting of a metallic material, especially synchronising devices for positively-locking gearshift couplings that consist of at least one synchronising ring and an equalising ring assigned thereto, characterised in that the sintered material of the one friction partner is a sintered ceramics that has a purity of at least 80% by weight of the sintered materials used.

2. Friction partners for wet-operating, lubricated friction couplings in which two surfaces are connected by frictional engagement, at least one friction partner consisting of sintered materials, especially synchronising devices for positively-locking gearshift couplings that consist of at least one synchronising ring and an equalising ring assigned thereto, characterised in that the sintered material of the one friction partner is a sintered ceramics that has a purity of at least 80% by weight of the sintered materials used, and the other friction partner consists of a sintered ceramics that has a chemical composition other than that of the first friction partner and that also has a purity of at least 80% by weight of the sintered materials used.

3. Friction partners according to claim 1, characterised in that the metallic material is a sintered steel.

4. Friction partners according to claim 1 or 2, characterised in that the sintered ceramics is oxide ceramics.

5. Friction partners according to claim 4, characterised in that the sintered ceramics is an oxide ceramics having an aluminium oxide content of at least 90% by weight.

6. Friction partners according to claim 4, characterised in that the sintered ceramics is a zirconium oxide.

7. Friction partners according to claim 1 or 2, characterised in that the sintered ceramics is a silicon nitride.

8. Friction partners according to any of claims 1 to 7, characterised in that at least one metal component is embedded in the sintered ceramics.

9. Friction partners according to any one of claims 1 to 8, characterised in that the sintered ceramics is connected to a carrier member.

10. Friction partners according to claim 9, characterised in that the sintered ceramics is made in the form of segments that are embedded in the carrier member.

11. Friction partners according to claim 10, characterised in that the segments are sintered into the carrier member.

12. Friction partners according to claim 9, characterised in that the sintered ceramics is applied to the carrier member as a thin layer (9) by sputtering.

13. Friction partners according to claim 12, characterised in that the thickness of the layer is from 2 to 50 μm.

14. Friction partners according to any one of claims 1 to 13, characterised in that at least one of the friction partners has drainage means (10, 11) in the region of contact with the other friction partner.

15. Friction partners according to any one of claims 1 to 6 and 8 to 13, characterised in that the sintered ceramics is a dense-sintered oxide ceramics that has a surface having a high proportion of pores.

16. Friction partners according to claim 7, characterised in that the sintered ceramics is a reaction-bonded silicon nitride having a porosity of from 15 to 25%.

**Revendications**

1. Pièces de frottement conjuguées pour embrayages à friction lubrifiés, avec deux surfaces liées par frottement, l'une des pièces de frottement étant constituée de matériaux frittés et l'autre d'un matériau métallique, en particulier pour dispositifs de synchronisation des crabotages qui se composent au moins d'une bague de synchronisation et d'une bague synchrone affectée à celle-ci, caractérisées par le fait que le matériau fritté de l'une des pièces de frottement conjuguées est une céramique frittée qui présente une pureté d'au moins 80% en poids de matériaux frittés.

2. Pièces de frottement conjuguées pour embrayages à friction lubrifiés, avec deux surfaces liées par frottement, l'une au moins des pièces de frottement étant constituée de matériaux frittés, en particulier pour dispositifs de synchronisation de crabotages, qui se composent au moins d'une bague de synchronisation et d'une bague synchrone affectée à celle-ci, caractérisées par le fait que le matériau fritté de l'une des pièces de frottement conjuguées est une céramique frittée qui présente une pureté d'au moins 80% des matériaux frittés et que l'autre pièce de frottement se compose de céramique frittée ayant une composition chimique différente de celle de la première pièce de frottement et présentant également une pureté d'au moins 80% en poids de matériaux frittés.

3. Pièces de frottement conjuguées suivant la revendication 1, caractérisées par le fait que le matériau métallique est de l'acier fritté.

4. Pièces de frottement conjuguées suivant revendication 1 ou 2, caractérisées par le fait que la céramique frittée est une céramique d'oxyde.

5. Pièces de frottement conjuguées suivant la revendication 4, caractérisées par le fait que la céramique frittée est une céramique d'oxyde ayant une teneur en oxyde d'aluminium d'au moins 90%.

6. Pièces de frottement conjuguées suivant la revendication 4, caractérisées par le fait que la céramique frittée est un oxyde de zirconium.

7. Pièces de frottement conjuguées suivant la revendication 1 ou 2, caractérisées par le fait que la céramique frittée est un nitrure de silicium.

8. Pièces de frottement conjuguées suivant l'une des revendications 1 à 7, caractérisées par le fait qu'au moins un composant métallique est incorporé à la céramique frittée.

9. Pièces de frottement conjuguées suivant l'une des revendications 1 à 8, caractérisées par le fait que la céramique frittée est liée à un corps support.

10. Pièces de frottement conjuguées suivant la revendication 9, caractérisées par le fait que la céramique frittée est conformée en segments qui sont frittés dans le corps support.

11. Pièces de frottement conjuguées suivant la revendication 10, caractérisées par le fait que les segments sont frittés dans le corps support.

12. Pièces de frottement conjuguées suivant la revendication 9, caractérisées par le fait que la céramique frittée est rapportée sous forme d'une couche mince (9) par pulvérisation cathodique sur le corps support.

13. Pièces de frottement conjuguées suivant la revendication 12, caractérisées par le fait que l'épaisseur de la couche est de 2 à 5 μm.

14. Pièces de frottement conjuguées suivant l'une des revendications 1 à 13, caractérisées par le fait qu'au moins l'une des pièces de frottement conjuguées présente, dans la zone de contact avec l'autre pièce de frottement, des moyens de drainage.

15. Pièces de frottement suivant l'une des revendications 1, 6 et 8 à 13, caractérisées par le fait que la céramique frittée est une céramique d'oxyde frittée de façon dense qui présente une surface comportant une proportion élevée de pores.

16. Pièces de frottement conjuguées suivant la revendication 7, caractérisées par le fait que la céramique frittée est un nitrure de silicium lié par réaction présentant une porosité de 15 à 25%.

Fig.1

# Fig.2

## Fig.3

0 080 490

**Fig. 4**

**Reibungszahl abhängig von der Gleitgeschwindigkeit (Drehzahl)**

Versuch 1

Fig. 5

$$v_g = \frac{d_m \cdot \pi}{600} \; cm/s$$

Drehzahl n in U/min

Gleitgeschwindigkeit $v_g$ in cm/s

| | Nr. | Werkstoff | | Fa | N |
|---|---|---|---|---|---|
| Reibkegel | 60 | 15 Mn Cr 5 | $R_a$  0,51  µm | × | 10 |
| Synchronring | 138 | Molybdän | aufgespritzt | □ | 20 |
| Schmierung: Shell Spirax 80 E.P. | | | | ○ | 50 |
| Einspritztemperatur  $\vartheta_E$ = 50 °C | | | | + | 100 |
| Viskosität bei $\vartheta_E$  $\eta_E$ = 0,050 Pa·s | | | | △ | 200 |

17

Fig: 6

Reibungszahl abhängig von der Gleitgeschwindigkeit (Drehzahl)

Versuch 2

$v_g = \dfrac{d_m \cdot \pi}{600}$ cm/s

Drehzahl n in U/min

Gleitgeschwindigkeit $v_g$ in cm/s

Fressen

|  | Nr. | Werkstoff |  |  |  |
|---|---|---|---|---|---|
| Reibkegel | 60 | 15 Mn Cr 5 | $R_a$ | 0,32 | µm |
| Synchronring | 138 | Molybdän | aufgespritzt |  |  |
| Schmierung: | Shell Spirax 80 E.P. |  |  |  |  |
| Einspritztemperatur | $\vartheta_E =$ | 80 | °C |  |  |
| Viskosität bei | $\vartheta_E$ | $\eta_E = 0,0147$ | Pa·s |  |  |

| Fa | N |
|---|---|
| x | 10 |
| □ | 20 |
| o | 50 |
| + | 100 |
| △ | 200 |

Reibungszahl abhängig von der Gleitgeschwindigkeit (Drehzahl)

Versuch 3

Fig.7

Drehzahl n in U/min

$v_g = \dfrac{d_m \cdot \pi}{600}$ cm/s    Gleitgeschwindigkeit $v_g$ in cm/s

|  | Nr. | Werkstoff |  |  |  | Fa | N |
|---|---|---|---|---|---|---|---|
| Reibkegel |  | 16 Mn Cr 5 | $R_a$ | 0,35 | µm | x | 400 |
| Synchronring | 1 | Leg. 455 |  |  |  | □ | 20 |
| Schmierung: | SAE 80 |  |  |  |  | o | 50 |
| Einspritztemperatur | $\vartheta_E =$ | 37 | °C |  |  | + | 100 |
| Viskosität bei $\vartheta_E$ | $\eta_E =$ | 0,085 | Pa·s |  |  | △ | 200 |

21

0 080 490

Reibungszahl abhängig von der Gleitgeschwindigkeit (Drehzahl)

Versuch 4

Fig. 8

$\mu$

0,25

0,20

0,15

0,10

0,06

0

Drehzahl n in U/min

0 200 400 600 800 1000 1200 1400 1600

$v_g = \dfrac{d_m \cdot \pi}{600}$ cm/s

0 100 200 300 400

Gleitgeschwindigkeit $v_g$ in cm/s

| | Nr. | Werkstoff | | | Fa | N |
|---|---|---|---|---|---|---|
| Reibkegel | | 16 Mn Cr 5 | $R_a$ | 0,35 µm | × | 400 |
| Synchronring | 1 | Leg. 455 | | | □ | 20 |
| Schmierung: SAE 80 | | | | | ○ | 50 |
| Einspritztemperatur $\vartheta_E$ = 100 °C | | | | | + | 100 |
| Viskosität bei $\vartheta_E$  $\eta_E$ = 0,0098 Pa·s | | | | | △ | 200 |

0 080 490

Reibungszahl abhängig von der Gleitgeschwindigkeit (Drehzahl)

Versuch 5

Fig. 9

| | Nr. | Werkstoff | | Fa | N |
|---|---|---|---|---|---|
| Reibkegel | 124 | Zr O₂ | $R_a$ 0,19 – 0,21 µm | □ | 20 |
| Synchronring | 265 | SS weich | v.E. gerillt | o | 50 |
| Schmierung: Fuchs SAE 80 | | | | + | 100 |
| Einspritztemperatur $\vartheta_E$ = 50 °C | | | | △ | 200 |
| Viskosität bei $\vartheta_E$ $\eta_E$ = 0,050 Pa·s | | | | × | 400 |

$$v_g = \frac{d_m \cdot \pi}{600} \; cm/s$$

25

Reibungszahl abhängig von der Gleitgeschwindigkeit (Drehzahl)

Versuch 6

Fig.10

$$v_g = \frac{d_m \cdot \pi}{600} \ cm/s$$

Drehzahl n in U/min

Gleitgeschwindigkeit $v_g$ in cm/s

|  | Nr. | Werkstoff |  |  |  | Fa | N |
|---|---|---|---|---|---|---|---|
| Reibkegel | 124 | Zr O₂ | $R_a$ | 0,2 | µm | □ | 20 |
| Synchronring | 272 | weich | v.E. spitz, gerillt |  |  | ○ | 50 |
| Schmierung: | Fuchs | SAE 80 |  |  |  | + | 100 |
| Einspritztemperatur | $\vartheta_E$ = | 50 | °C |  |  | △ | 200 |
| Viskosität bei | $\vartheta_E$ | $\eta_E$ = | 0,050 | Pa·s |  | × | 400 |

**Versuch 7**

Reibungszahl abhängig von der Gleitgeschwindigkeit (Drehzahl)

*Fig. 11*

$$v_g = \frac{d_m \cdot \pi}{600} \ cm/s$$

Gleitgeschwindigkeit $v_g$ in cm/s

Drehzahl n in U/min

|  | Nr. | Werkstoff |  |  |  | Fa | N |
|---|---|---|---|---|---|---|---|
| Reibkegel | 121 | Zr O$_2$ | R$_a$ | 0,95 | µm | □ | 20 |
| Synchronring | 266 | weich |  | gerillt |  | O | 50 |
| Schmierung: | Fuchs | SAE 80 |  |  |  | + | 100 |
| Einspritztemperatur | $\vartheta_E$ = | 50 | °C |  |  | △ | 200 |
| Viskosität bei $\vartheta_E$ | $\eta_E$ = | 0,050 | Pa·s |  |  | × | 400 |

29

Fig. 12

Reibungszahl abhängig von der Gleitgeschwindigkeit (Drehzahl)

Versuch 8

$v_g = \dfrac{d_m \cdot \pi}{600}$ cm/s    Gleitgeschwindigkeit $v_g$ in cm/s

Drehzahl n in U/min

| | Nr. | Werkstoff | | Fa | N |
|---|---|---|---|---|---|
| Reibkegel | 121 | Zr O$_2$ | R$_a$ 0,92 µm | □ | 20 |
| Synchronring | 266 | weich | gerillt | O | 50 |
| Schmierung: | Fuchs SAE 80 | | | + | 100 |
| Einspritztemperatur $\vartheta_E$ = 80 °C | | | | △ | 200 |
| Viskosität bei $\vartheta_E$ $\eta_E$ = 0,0147 Pa·s | | | | × | 400 |

Fig. 13

Reibungszahl abhängig von der Gleitgeschwindigkeit (Drehzahl)

Versuch 9

| | Nr. | Werkstoff | | | | Fa | N |
|---|---|---|---|---|---|---|---|
| Reibkegel | 133 | $Al_2 O_3$ | $R_a$ | 0,3 | µm | □ | 20 |
| Synchronring | 272 | weich | spitz gerillt | | | o | 50 |
| Schmierung: | Fuchs SAE 80 | | | | | + | 100 |
| Einspritztemperatur | $\vartheta_E$ = | | 50 | °C | | △ | 200 |
| Viskosität bei $\vartheta_E$ | $\eta_E$ = | 0,050 | Pa·s | | | × | 400 |

$v_g = \dfrac{d_m \cdot \pi}{600}$ cm/s

Gleitgeschwindigkeit $v_g$ in cm/s

Drehzahl n in U/min

**Reibungszahl abhängig von der Gleitgeschwindigkeit (Drehzahl)**

Versuch 10

Fig. 14

μ axis: 0,25 — 0,20 — 0,15 — 0,10 — 0,06 — 0

Drehzahl n in U/min (0, 200, 400, 600, 800, 1000, 1200, 1400, 1600)

$$v_g = \frac{d_m \cdot \pi}{600} \ cm/s$$

Gleitgeschwindigkeit $v_g$ in cm/s (0, 250, 500)

| | Nr. | Werkstoff | | | Fa | N |
|---|---|---|---|---|---|---|
| Reibkegel | 133 | $Al_2 O_3$ | $R_a$ | μm | □ | 20 |
| Synchronring | 272 | weich | spitz gerillt | | o | 50 |
| Schmierung: | Fuchs SAE 80 | | | | + | 100 |
| Einspritztemperatur | $\vartheta_E$ = 80 | | °C | | △ | 200 |
| Viskosität bei $\vartheta_E$ | $\eta_E$ = 0,0147 | Pa·s | | | × | 400 |

Reibungszahl abhängig von der Gleitgeschwindigkeit (Drehzahl)

Versuch 11

Fig. 15

$v_g = \dfrac{d_m \cdot \pi}{600}$ cm/s    Gleitgeschwindigkeit $v_g$ in cm/s

Drehzahl n in U/min

| | Nr. | Werkstoff | | Fa | N |
|---|---|---|---|---|---|
| Reibkegel | 135 | $Si_3$ $N_4$ | $R_a$  0,25  µm | □ | 20 |
| Synchronring | 269 | nitriert | n.E. gerillt | ○ | 50 |
| Schmierung : | Fuchs  SAE 80 | | | + | 100 |
| Einspritztemperatur  $\vartheta_E$ =  50    °C | | | | △ | 200 |
| Viskosität  bei  $\vartheta_E$  $\eta_E$ =  0,050    Pa·s | | | | x | 400 |

37

Reibungszahl abhängig von der Gleitgeschwindigkeit (Drehzahl)

Versuch 12

Fig. 16

$v_g = \dfrac{d_m \cdot \pi}{600}$ cm/s    Gleitgeschwindigkeit $v_g$ in cm/s

Drehzahl n in U/min

|  | Nr. | Werkstoff |  |  | Fa | N |
|---|---|---|---|---|---|---|
| Reibkegel | 135 | $Si_3 N_4$ | $R_a$ 0,27 | µm | □ | 20 |
| Synchronring | 269 | nitriert | nE. gerillt | | ○ | 50 |
| Schmierung: | Fuchs | SAE 80 | | | + | 100 |
| Einspritztemperatur | $\vartheta_E$ = | 80 | °C | | △ | 200 |
| Viskosität bei $\vartheta_E$ | $\eta_E$ = | 0,0147 | Pa·s | | × | 400 |